# EUROPÄISCHE PATENTSCHRIFT

(11) **EP 3 807 068 B1**
(45) Veröffentlichungstag und Bekanntmachung des Hinweises auf die Patenterteilung: **07.06.2023**
(21) Anmeldenummer: 19726346.0
(22) Anmeldetag: 16.05.2019
(51) Int. Cl.: B29C 45/26, B29C 33/00

(54) **FORMWERKZEUG MIT EINEM ANGUSSABSCHNEIDER**
MOULDING TOOL WITH A SPRUE CUTTER
OUTIL DE MOULAGE AVEC COUPEUR DE GRAPPE PLASTIQUE

(30) Priorität: 13.06.2018 DE 102018114187
(43) Veröffentlichungstag der Anmeldung: 21.04.2021
(73) Patentinhaber: BBG GmbH & Co. KG, 87719 Mindelheim (DE)
(72) Erfinder: SATZGER, Bernhard, 87719 Mindelheim Bayern (DE)
(74) Vertreter: Keller Schneider Patentanwaltsgesellschaft mbH
(86) Internationale Anmeldenummer: PCT/EP2019/062711
(87) Internationale Veröffentlichungsnummer: WO 2019/238354

(56) Entgegenhaltungen:
- EP-A1- 3 090 853
- DE-A1- 1 924 022
- DE-A1- 2 513 594
- DE-A1-102008 030 823
- DE-A1-102009 012 287
- US-A- 4 767 312

## Beschreibung

Die Erfindung betrifft ein Formwerkzeug gemäß dem Oberbegriff des Patentanspruchs 1.

Ein derartiges Formwerkzeug ist aus der Fertigung von mit Polyurethan (PU) umschäumten Glasdeckeln für Schiebedächer von Fahrzeugen seit langem bekannt. Der am Übergang vom Angusskanal zur Kavität für die Umschäumung nach Aushärten des Polyurethans verbleibende lappenartige Anguss muss bislang von einem Werker mit einem scharfen Messer sauber von der Umschäumung abgetrennt werden. Abgesehen vom zusätzlichen Aufwand besteht dabei auch die Gefahr, die Umschäumung mit dem Messer irreparabel zu beschädigen, wodurch der gesamte umschäumte Glasdeckel dann als Ausschuss zu behandeln ist.

Aus der CN 206386338 U ist ein Werkzeug zur Herstellung eines Kunststoffteils bekannt, bei dem ein Abstreifer mittels eines Hydraulikzylinders bewegbar am Werkzeug gelagert ist. Aus der JP 60089322 A ist ein Werkzeug zur Herstellung eines Kunststoffteils bekannt, bei dem ein quer zum Angusskanal bewegbarer, mit einer Bohrung den Angusskanal verlängernder Schieber den Angusskanal nach Befüllung einer formbildenden Kavität verschließt.

Weiterhin ist aus der DE 10 2009 012 287 A1 ein Verfahren und eine Vorrichtung zur Herstellung eines geschäumten Spritzgussbauteils bekannt. Die Vorrichtung umfasst ein Formwerkzeug mit einer aus einem Formwerkzeugkern und einer Formwerkzeugmatrize gebildeten Kavität. Im Formwerkzeug ist ein Schieber angeordnet, der über einen Angusskanal permanent mit einer Einspritzdüse für plastifiziertes Kunststoffmaterial in Wirkverbindung steht. Durch Ausfahren des Schiebers wird der Angusskanal mit einer in ihrer Größe veränderbaren Kavität verbunden, so dass plastifizierter Kunststoff in die Kavität eingefüllt werden kann. Die Verbindung wird durch Einfahren des Schiebers nach dem Füllen der Kavität unterbrochen.

Eine weitere Vorrichtung zum Herstellen eines Spritzgussbauteils ist aus der US 4 767 312 A bekannt.

Aufgabe der Erfindung ist es, ein Formwerkzeug zu schaffen, mittels dem ein plattenförmiges Bauteil mit einer Umschäumung ohne Nacharbeit fertig aus dem Werkzeug entnehmbar ist.

Diese Aufgabe wird durch ein Formwerkzeug mit den Merkmalen des Anspruchs 1 gelöst. Vorteilhafte Ausgestaltungen der Erfindung sind in den Unteransprüchen angegeben.

Gemäß der Erfindung weist ein Formwerkzeug zur Herstellung einer Umschäumung aus Kunststoff an einem plattenförmigen Bauteil oder zur Herstellung eines geschäumten Kunststoffteils einen Mischkopf zur Erzeugung flüssigen Kunststoffs aus wenigstens zwei Komponenten auf. Das Formwerkzeug hat wenigstens eine erste Kavität zur Aufnahme des Kunststoffs zur Bildung der Umschäumung oder des Kunststoffbauteils. Ein Angusskanal dient zur Verbindung des Mischkopfs mit der wenigstens einen ersten Kavität. Eine den Angusskanal verbreiternde weitere Kavität ist am Übergang des Angusskanals zur ersten Kavität ausgebildet. Erfindungsgemäß ist am Formwerkzeug ein Angussabschneider, der auch als Angusstrimmer bezeichnet wird, mit wenigstens einem Schieber bewegbar gelagert, der mittels wenigstens eines Betätigungszylinders in Richtung des Angusskanals auf die erste Kavität zu bewegbar ist. In einer Endposition seiner Bewegung schließt der Schieber mit wenigstens einer Kante und/oder Kontur die erste Kavität gegenüber dem Angusskanal und/oder gegenüber der weiteren Kavität ab. In der Endposition des Schiebers ist zwischen dem Schieber und dem Mischkopf im Bereich des Angusskanals ein Spalt zur Aufnahme überflüssigen Kunststoffmaterials freigegeben.

Besonders vorteilhaft ist es, wenn der Betätigungszylinder mittels einer Zweigleitung hydraulisch mit einer Hauptleitung eines Reinigungszylinders verbunden ist, der zur Betätigung eines Reinigungskolbens zur Reinigung des Mischkopfs dient. Der Schieber benötigt dadurch keine weitere Steuerung, sondern wird von der Hydraulik der Formmaschine gleichzeitig mit oder mittels eines zusätzlichen Ventils geringfügig zeitversetzt vor dem ohnehin nach jedem Schäumvorgang notwendigerweise angesteuerten Reinigungshub ausgeführt.

Die Ansteuerung erfolgt dabei vorteilhaft so, dass der Reinigungskolben und der Betätigungszylinder des Schiebers erst bei einer vollständigen Befüllung der ersten Kavität - also nach vollständiger Erzeugung der Umschäumung - betätigbar sind. Dies erfolgt bevorzugt in Abhängigkeit von einer definierten, im Mischkopf erzeugten und in die erste Kavität geförderten Menge des Kunststoffs.

Gemäß einer vorteilhaften Ausführung ist vorgesehen, dass der Schieber mit dem Betätigungszylinder mittels eines in einer vertikalen Führungsnut verschiebbar gelagerten Führungselements verbunden ist.

Besonders vorteilhaft ist ein Formwerkzeug, bei dem der Schieber mittels wenigstens eines weiteren Betätigungszylinders mittels der am Führungselement geführten Führungsnut vertikal verfahrbar ist. Hierdurch kann der Schieber für einen Reinigungsvorgang in einfacher Weise in eine Reinigungsposition angehoben und anschließend wieder in seine Gebrauchsposition abgesenkt werden.

Erfindungsgemäß wird in der Endposition des Schiebers zwischen dem Schieber und dem Mischkopf im Bereich des Angusskanals der Spalt zur Aufnahme überflüssigen Kunststoffmaterials freigegeben. Dieser Spalt dient zur geordneten Abfuhr überschüssigen, noch im Auslaufrohr des Mischkopfes befindlichen flüssigen Kunststoffmaterials beim anschließenden Reinigungshub des Mischkopfes. Das überschüssige Kunststoffmaterial bildet dabei in dem dafür vorgesehenen Spalt ein dünnes, lappenartiges Gebilde, das von der Kante des Angussabschneiders sauber vom Kunststoffrahmen oder Kunststoffbauteil getrennt wird.

In einer bevorzugten Ausführungsform weist der Schieber an seiner der ersten Kavität zugewandten Vorderkante eine an die Kontur der Umschäumung angepasste Kontur auf. Durch diese Kontur wird die Umschäumung entsprechend der für sie vorgesehenen Kontur begrenzt und geformt.

Vorteilhaft ist der Schieber mit wenigstens einer zumindest teilweise den Angusskanal und die weitere Kavität mit Abstand umgebenden Dichtung versehen. Die Dichtung verhindert ein zu breites Verlaufen des überschüssigen Kunststoffmaterials und unterstützt dessen geordnete Rückführung in den Spalt.

Nachfolgend wird ein Ausführungsbeispiel eines erfindungsgemäßen Werkzeugs unter Bezugnahme auf die Zeichnungen näher erläutert. Es zeigt:
- Fig. 1: eine perspektivische Gesamtansicht eines unteren Formwerkzeugs;
- Fig. 2: eine Draufsicht auf den vorderen Teil des Werkzeugs mit dem Mischkopf und dem Angussabschneider in der das Einspritzen von Kunststoffmaterial freigebenden Grundstellung seines Schiebers,
- Fig. 3: eine perspektivische Detailansicht des vorderen Werkzeug-Bereichs mit dem Angussabschneider in der Position seines Schiebers, in der die Einbringung von Kunststoffmaterial abgeschlossen ist und der Anguss abgetrimmt wird,
- Fig. 4: eine perspektivische Schnittdarstellung durch den Schieber des Angussabschneiders im Bereich von dessen Betätigungszylinder zur Verdeutlichung von dessen Vertikalführung,
- Fig. 5: eine perspektivische Schnittdarstellung durch den Schieber des Angussabschneiders im Bereich des Angusskanals in der Position seines Schiebers, in der die Einbringung von Kunststoffmaterial abgeschlossen ist und der Anguss abgetrimmt wird,
- Fig.6: eine perspektivische Schnittdarstellung durch den in seine Reinigungsposition angehobenen Schiebers im Bereich des Angusskanals,
- Fig. 7: eine vergrößerte perspektivische Schnittdarstellung durch den vorderen Bereich des Schiebers in der Befüllposition für die erste Kavität,
- Fig. 8: eine vergrößerte perspektivische Schnittdarstellung durch den vorderen Bereich des Schiebers in der Verschließ- und Trennposition der ersten Kavität vom Anguss,
- Fig. 9: eine Variante zur Figur 2 mit einer zusätzlichen Dichtung am Schieber;
- Fig. 10: eine Variante zur Figur 3 mit der zusätzlichen Dichtung am Schieber; und
- Fig. 11: eine Variante eines unteren Formwerkzeugs mit einem schwenkbar daran angelenkten Angussabschneider in dessen geschwenkter Reinigungsposition.

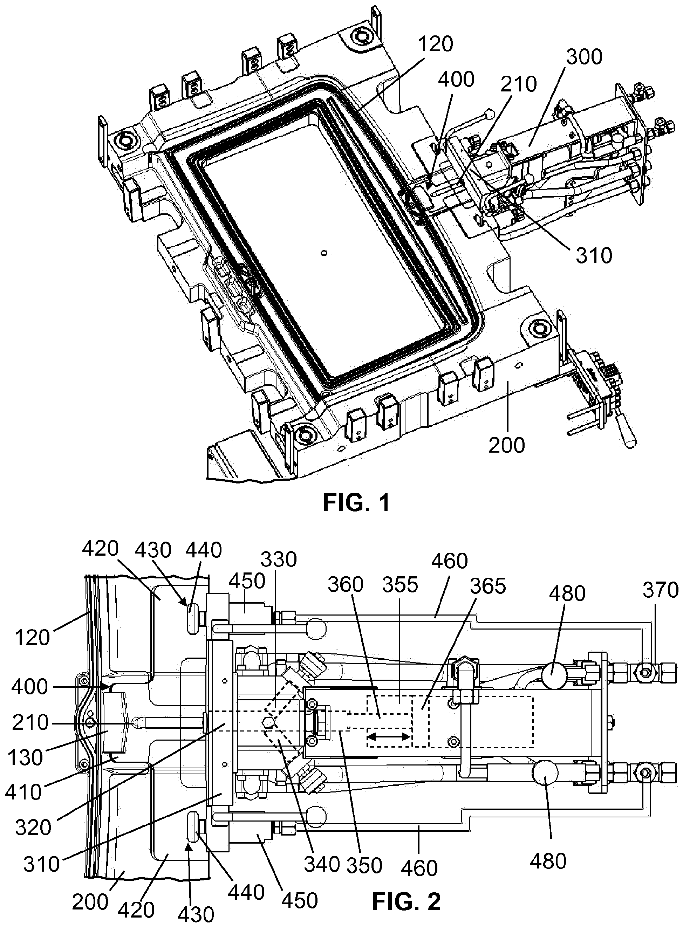

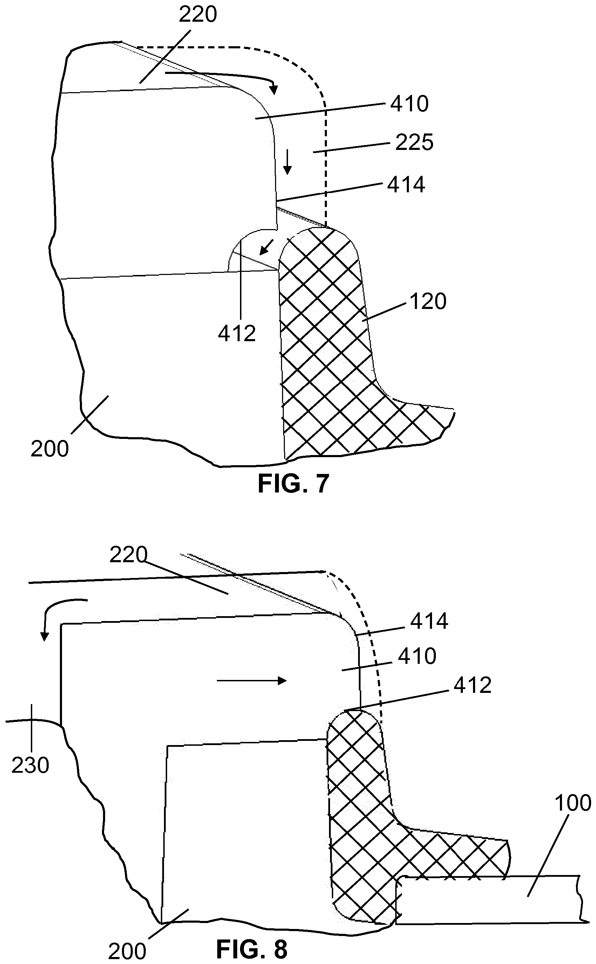

In Figur 1 ist ein Formwerkzeug 200 in einer Gesamtdarstellung gezeigt. Das Formwerkzeug 200 besteht aus dem dargestellten unteren Formwerkzeug und einem nicht dargestellten von oben auf dieses absenkbaren oberen Formwerkzeug. In das untere Formwerkzeug 200 wird ein in Fig. 1 nicht dargestelltes plattenförmiges Bauteil 100 (siehe Fig. 8) eingelegt, das im vorliegenden Beispiel von einem Glasdeckel 100 für ein Fahrzeug-Schiebedach gebildet wird. Der Glasdeckel 100 wird im Formwerkzeug 200 an seinem Rand mit einer Umschäumung 120 aus Kunststoff umgeben.

Zur Einbringung des flüssigen Kunststoffs dient ein Mischkopf 300, der mit einer an das Formwerkzeug 200 angrenzenden Platte 310 versehen ist, in die ein Mischkanal 320 ausmündet. Der im Mischkopf 300 ausgebildete Mischkanal 320 geht bei Austritt auf der Vorderseite der Platte 310 in einen Angusskanal 210 des Formwerkzeugs 200 über.

Ein zum plattenförmigen Bauteil 100 hin weisender vorderer Teil des Angusskanals 210 ist in einem in den auf die Figur 1 folgenden Figuren dargestellten Schieber 410 ausgebildet, der Bestandteil eines Angussabschneiders 400 ist.

Wie in Figur 2 ersichtlich, münden in den Mischkanal 320 ein erster Einspritzkanal 330 für eine erste Komponente und ein zweiter Einspritzkanal 340 für eine zweite Komponente ein. Bei dem im Mischkanal 320 entstehenden Kunststoff handelt es sich vorzugsweise um Polyurethan (PU). Die beiden gemischten Komponenten werden im noch flüssigen Zustand durch den Mischkanal 320 und den Angusskanal 210 in eine erste Kavität 240 am Formwerkzeug 200 eingebracht, die die Kontur der Umschäumung 120 für den Glasdeckel 100 als Negativ abbildet. Die erste Kavität 240 wird zwischen dem unteren Formwerkzeug 200 und dem nicht dargestellten oberen Formwerkzeug gebildet, wenn diese von einer Formmaschine in eine dichte Anlage zusammengefahren wurden.

Am Übergang zwischen dem Angusskanal 210 und der ersten Kavität 240 ist eine zweite Kavität 220 für den Anguss 130 ausgebildet, die als verbreiterter Bereich das aus dem Angusskanal 210 zur ersten Kavität 240 strömende flüssige Kunststoffmaterial in breiterer Front in die erste Kavität 240 einleitet. Der Anguss 130 verbleibt bei herkömmlichen Formwerkzeugen nach Fertigstellung der Umschäumung 120, d. h. nach Aushärtung des Kunststoffmaterials, als Lappenförmiger Anhang an der Umschäumung 120 haften und muss manuell von dieser abgetrennt werden.

Der Schieber 410 besteht aus einem mittleren, in die zweite Kavität 220 hineinreichenden Teil und aus zwei seitlich von dem mittleren Teil angeordneten Haltern 420, deren Vorderkanten von der Platte 310 aus gesehen nur etwa bis zur Hälfte des Abstandes zwischen Platte 310 und Umschäumung 120 reichen.

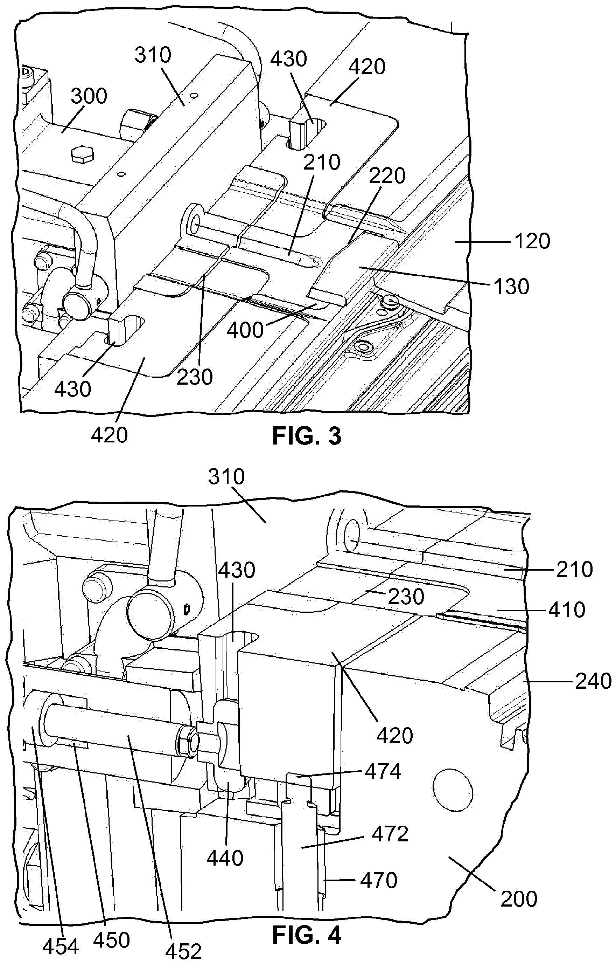

In beiden Haltern 420 ist jeweils eine T-förmig hinterschnittene vertikale Führungsnut 430 ausgebildet, in welche ein als pilzförmiger Nutenstein ausgebildetes Führungselement 440 eingreift. Das Führungselement 440 ist seinerseits, wie insbesondere aus Figur 4 zu ersehen, über eine Führungsstange 452 mit einem Kolben 454 verbunden. Der Kolben 454 ist in einem horizontalen Betätigungszylinder 450 verschiebbar gelagert. Der horizontale Betätigungszylinder 450 ist zu diesem Zweck mit einer hydraulischen Zweigleitung 460 verbunden (Figur 2), die von einer hydraulischen Hauptleitung 370 abzweigt.

Die hydraulische Hauptleitung 370 mündet in einen im Mischkopf 300 angeordneten Reinigungszylinder 355, in dem ein Reinigungskolben 365 hydraulisch verschiebbar gelagert ist. Der Reinigungskolben 365 ist mit einem Reinigungsstößel 360 verbunden, der in einen Reinigungskanal 350 hineinragt, der in rückwärtiger Verlängerung des Mischkanals 320 an diesen anschließt und mit seiner Stirnseite den Mischkanal 320 hinter den beiden Einspritzkanälen 330 und 340 nach hinten verschließt. Der Reinigungskolben 365 und der Reinigungsstößel 360 sind aus der in Figur 2 angedeuteten Betriebsposition, in der aus beiden Einspritzkanälen 330 und 340 die Komponenten zur Erzeugung des Kunststoffmaterials in den Mischkanal 320 eingespritzt bzw. eingedüst werden, ausgehend von der in Figur 2 gezeigten Position nach links in eine Reinigungsposition verschiebbar, in der die vordere Stirnseite des Reinigungsstößels 360 vom Reinigungskolben 365 bis zur vorderen Stirnseite der Platte 310 geschoben wird. Hierbei wird der Mischkanal 310 durch den Reinigungsstößel 360 komplett von Kunststoffmaterial gereinigt, das nach vorne aus dem Mischkanal ausgeschoben wird.

Durch die unmittelbare Kopplung der hydraulischen Zweigleitung 460 mit der Hauptleitung 370 werden beim Aktivieren des Reinigungskolben 365 gleichzeitig auch die Kolben 454 in den Betätigungszylindern 450 mit nach vorne (d. h. in Figur 2 nach links) geschoben. Dadurch wird der Schieber 410 des Angussabschneiders 400 ebenfalls nach links verschoben.

Während der Schieber 410 in der in Figur 7 gezeigten Betriebsposition, während der flüssiger Kunststoff zur Erzeugung der Umschäumung 120 durch die Kavität 220 und den vertikalen Zufuhrkanal 225 in die Kavität 240 strömt, um diese vollständig auszufüllen, verschließt der Schieber 410 in der in Figur 8 gezeigten Position mit seiner Vorderkante 414 den Zufuhrkanal 225. Dabei legt sich die im Querschnitt viertelkreisförmige Kontur 412 des Schiebers 410 exakt an die runde Abschlusskontur der nach oben gerichteten, abgerundeten Rippe der Umschäumung 120 an und unterstützt deren Formung beim Aushärten des Kunststoffmaterials.

Durch Einschaltung eines hydraulischen Verzögerungsgliedes 380 in der Hauptleitung 470 - beispielsweise eines Ventils oder einer Drossel hinter dem Abzweig der Zweigleitung 460 - oder durch Beaufschlagung mittels eines separaten Ventils und einer separaten Hydraulikleitung wird der Betätigungszylinder 450 besonders vorteilhaft zeitlich bereits etwas vor dem Reinigungskolben 365 beaufschlagt, so dass bereits vor dem Ausschieben des Rest-Kunststoffmaterials aus dem Mischkanal 320 durch den Angussabschneider 400 die Verbindung zur Kavität 240 unterbrochen ist und kein schädlicher Druckanstieg mehr in der Kavität 240 erfolgen kann.

Da die Vorderkante 414 des Schiebers 410 in der in Figur 8 gezeigten Schließposition den gesamten Zufuhrkanal 225 verschließt, wird der überschüssige flüssige Kunststoff gezwungen, aus der Kavität 220 für den Anguss 130 nach hinten in den Spalt 230 abzufließen, den der Schieber 410 bei seiner Bewegung nach vorne aus der in Figur 7 gezeigten Position in die in Figur 8 gezeigte Position an seiner Rückseite freigibt.

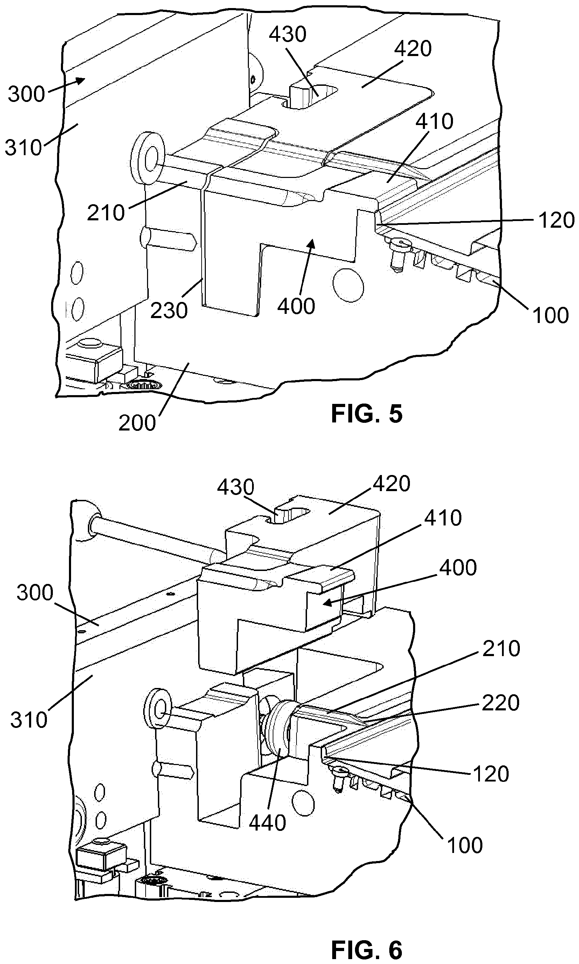

Wie gut aus den Figuren 4 und 6 zu erkennen ist, ist der Schieber 410 in einer bevorzugten Variante nicht nur horizontal, d. h. parallel zum Angusskanal 210, bewegbar, sondern auch vertikal. Hierzu sind weitere Betätigungszylinder 470 unterhalb der Halter 420 des Schiebers 410 angeordnet. Die in den Betätigungszylindern 470 bewegbaren Kolben 472 stehen über eine Anlenkung 474 mit den Haltern 420 in Antriebsverbindung. Bei der vertikalen Bewegung des Schiebers 410 aus der in Figur 4 gezeigten Situation in die in Figur 6 gezeigte Position werden die Halter 420 durch die vertikalen Führungsnuten 430 an den Führungselementen 440 geführt. Die in Figur 6 dargestellte angehobene Position des Schiebers 410 dient zu einer gründlichen Reinigung des Formwerkzeugs 200, bei der auch Kunststoffmaterial entfernt werden kann, das in den Spalt 230 zurückgeflossen ist.

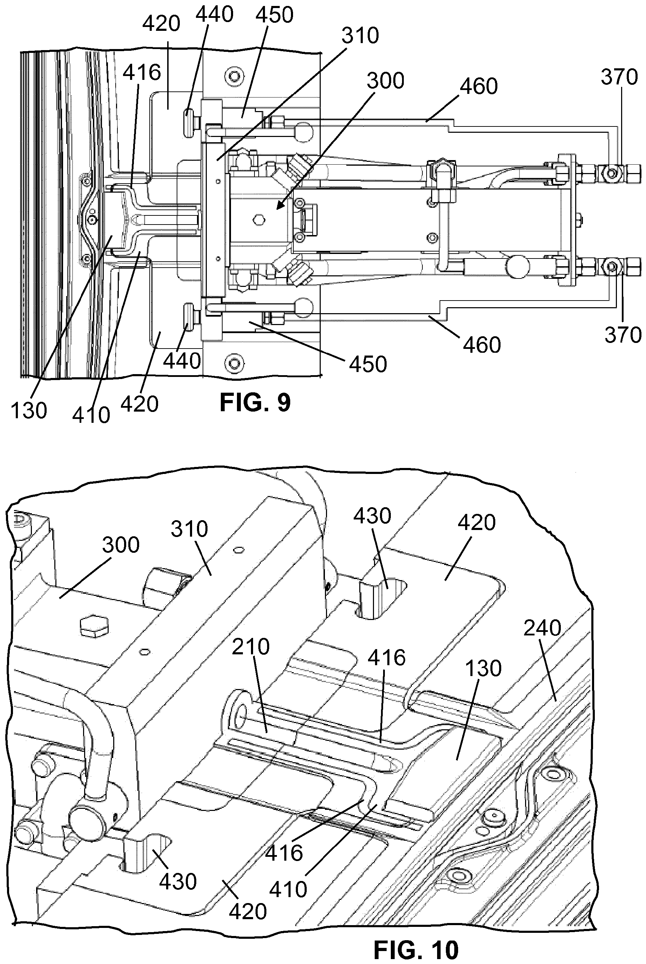

In der in den Figuren 9 und 10 dargestellten Ausführungsform ist ergänzend zu den Figuren 2 und 3 auf der Oberseite des Schiebers 410 eine zusätzliche Dichtung 416 angeordnet, die sich beidseitig des Angusskanals 210 nach vorne erstreckt, sich im Bereich der zweiten Kavität 220 bzw. des Angusses 130 erweitert und diesen zu beiden Seiten umgibt. Durch diese Dichtung 416 wird ein Abfließen des flüssigen Kunststoffs zu den Seiten in Richtung der Halter 420 wirksam unterbunden.

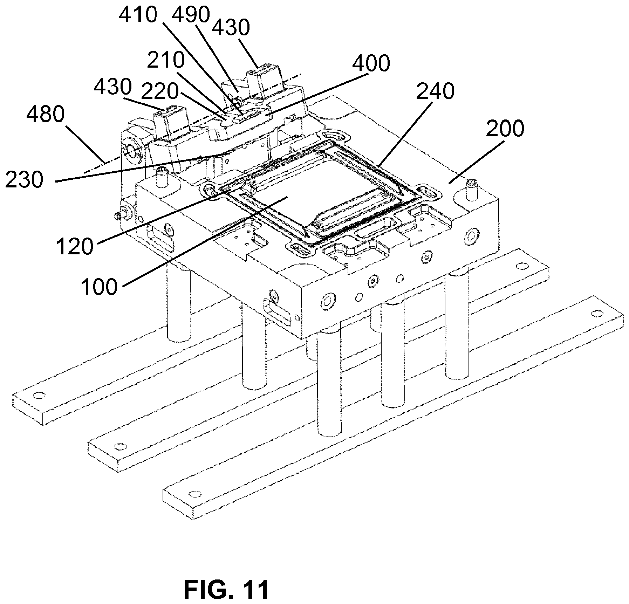

In Fig. 11 ist eine Alternative eines Formwerkzeugs 200 gezeigt, bei der der Angussabschneider 400 nach dem linearen Nachvornefahren des Schiebers 410 in dessen Trenn- oder Trimmposition durch eine Befestigung an einer schwenkbaren Konsole 490 um eine Schwenkachse 480 bezüglich des Formwerkzeugs 200 schwenkbar gelagert ist. In Fig. 11 ist das Umschäumen des plattenförmigen Bauteils 100 mit einer Umschäumung 120 abgeschlossen. Der Schieber 410 hat die Kavität 240 gegenüber der Kavität 220 abgeschlossen und - in Fig. 11 nicht gezeigt - der Reinigungskolben 365 hat den Mischkanal 320 durch Ausschieben des restlichen Kunststoffmaterials gereinigt. Das überschüssige Kunststoffmaterial ist dabei im vertikalen Spalt 230 zu einem lappenförmigen Gebilde ausgehärtet. Durch das in Fig. 11 gezeigte Hochschwenken des Angussabschneiders 400 wird dieser Spalt 230 für eine Reinigung und das Einbringen eines Trennmittels besser zugänglich.

Im Unterschied zu bekannten Formwerkzeugen kann der Glasdeckel 100 mit der fertigen Umschäumung 120 nach Aushärtung des Kunststoffmaterials aus dem erfindungsgemäßen Formwerkzeug 200 entnommen werden, ohne dass sich ein noch zu entfernender Anguss 130 an der Umschäumung 120 befinden würde.

Eine kostenaufwändige, manuelle Nacharbeit entfällt somit vollständig und auch die Gefahr, bei der manuellen Nacharbeit die Umschäumung 120 irreparabel zu beschädigen, entfällt völlig.

Die Dimensionierung des Angusses im Werkzeug kann durch die Erfindung kleiner ausgelegt werden, Das Verhältnis Länge/Dicke kann beispielsweise von bisher 100 mm Länge x 1 mm Dicke, also 100 mm² Querschnitt auf 50 mm Länge x 2 mm Dicke, also ebenfalls 100 mm² Querschnitt verändert werden. Das bedeutet eine bessere Formfüllung vom Zentrum heraus, weniger Turbulenzen des Materials und damit verbunden weniger Fehlerquellen beim Schäumvorgang. Die Trennlinien sind dann nur in einem Bereich von 50 mm sichtbar und nicht über eine Länge von 100 mm, wie bisher.

Durch die Erfindung wird ein Druckanstieg im Werkzeug vermieden, welcher sich normalerweise ergibt, wenn durch den Reinigungskolben das Rest-Kunststoff-material nach dem vollständigen Füllen der Kavität aus dem Mischkopf-Auslaufrohr herausgedrückt wird. Dieses Restmaterial - bei einem Kunststoffrahmen eines umschäumten Glasdeckels eines Schiebedaches sind dies etwa nur 8 Gramm - ist häufig der Grund dafür, dass das Kunststoffmaterial an einer Dichtung vorbeigedrückt wird, dass dort beispielsweise eingelegte Blechlaschen stirnseitig überschäumt werden, dass bei einer Glasdeckelumschäumung häufig die Glasecken überschäumt werden oder dass Schaumeinleger kollabieren.

Durch die Erfindung wird wirksam vermieden, dass sich Oberflächenfehler in Form von leichten Wellen oder Sinkmarks bilden, da der noch flüssige Kunststoff zuerst komprimiert wird und bis zur Aushärtung sozusagen durch die Schwerkraft wegfließt.

Die Erfindung ermöglicht auch eine Einsparung von Schiebern, da im Sichtbereich kein Anguss erlaubt ist. Der Anguss sitzt in diesem Fall nicht an der Außenkante des Bauteils, sondern irgendwo in der Geometrie. Auch hierdurch wird eine bessere Qualität des fertigen Bauteils erreicht, da sichtbare Trennlinien am Bauteil vermieden werden.

Schließlich bringt die Erfindung auch einen wesentlichen wirtschaftlichen Vorteil durch eine signifikante Zeitersparnis: Für das Abschneiden und Anschleifen des Radius an der Kontur sind ca. 10 Sek. angesetzt, die infolge der Erfindung wegfallen. Das ergibt bei einem Dreischichtbetrieb ca. 5300 Teile, die pro Jahr zusätzlich gefertigt werden können.

Die vorliegende Erfindung funktioniert nicht nur in einem Werkzeug für die Herstellung von Kunststoffrahmen an Glasdeckeln, sondern für alle Bauteile, die mit einen derartigen Mischkopfsystem zumindest aus Zweikomponenten-Kunststoffen in gleicher oder ähnlicher Weise in einem formgebenden Werkzeug hergestellt werden. Als Werkstoffe für den Kunststoffrahmen oder das Kunststoffbauteil eignet sich somit nicht nur Polyurethan (PU), sondern auch andere Werkstoffe, wie beispielsweise auch Epoxidharze bei einem Harzinjektionsverfahren (RTM oder auch Resin Transfer Molding genannt) oder mit anderen Kunststoffen oder in anderen Verfahren.

In den Figuren ist das Formwerkzeug 200 als unteres Formwerkzeug dargestellt, an dem der Mischkopf 300 und der Angusskanal 210 vorgesehen sind. Dieses untere Formwerkzeug wird von einem in den Figuren nicht dargestellten oberen Formwerkzeug ergänzt, das beispielsweise in der Anmeldung DE 10 2019 112 763.7 derselben Anmelderin dargestellt ist und an dem der Mischkopf 300 und der Angusskanal 210 alternativ ebenso vorgesehen sein können.

## Patentansprüche

1. Formwerkzeug (200) zur Herstellung einer Umschäumung (120) aus Kunststoff an einem plattenförmigen Bauteil (100) oder zur Herstellung eines geschäumten Kunststoffteils (120), mit einem Mischkopf (300) zur Erzeugung flüssigen Kunststoffs aus wenigstens zwei Komponenten, mit wenigstens einer ersten Kavität (240) zur Aufnahme des Kunststoffs zur Bildung der Umschäumung (120) oder des geschäumten Kunststoffteils (120), mit einem Angusskanal (210) zur Verbindung des Mischkopfs (300) mit der wenigstens einen ersten Kavität (240) und mit einer am Übergang des Angusskanals (210) zur ersten Kavität (240) ausgebildeten, den Angusskanal (210) verbreiternden weiteren Kavität (220), wobei am Formwerkzeug (200) ein Angussabschneider (400) mit wenigstens einem Schieber (410) bewegbar gelagert ist, der mittels wenigstens eines Betätigungszylinders (450) in Richtung des Angusskanals (210) auf die erste Kavität (240) zu bewegbar ist und in einer Endposition seiner Bewegung mit wenigstens einer Kante (414) und/oder Kontur (412) die erste Kavität (240) gegenüber dem Angusskanal (210) und/oder gegenüber der weiteren Kavität (220) abschließt, wobei in der Endposition des Schiebers (410) zwischen dem Schieber (410) und dem Mischkopf (300) im Bereich des Angusskanals (210) ein Spalt (230) zur Aufnahme überflüssigen Kunststoffmaterials freigegeben wird.

2. Formwerkzeug, nach Anspruch 1, **dadurch gekennzeichnet, dass** der Betätigungszylinder (450) mittels einer Zweigleitung (460) hydraulisch mit einer Hauptleitung (370) eines Reinigungszylinder (355) verbunden ist, der zur Betätigung eines Reinigungskolbens (365) zur Reinigung des Mischkopfs (300) dient.

3. Formwerkzeug nach Anspruch 2, **dadurch gekennzeichnet, dass** der Betätigungszylinder (450) und der Reinigungskolben (365) erst bei einer vollständigen Befüllung der ersten Kavität (240) betätigbar sind.

4. Formwerkzeug nach einem der Ansprüche 1 bis 3, **dadurch gekennzeichnet, dass** das der Schieber (410) mit dem Betätigungszylinder (450) mittels eines in einer vertikalen Führungsnut (430) verschiebbar gelagerten Führungselements (440) verbunden ist.

5. Formwerkzeug nach Anspruch 4, **dadurch gekennzeichnet, dass** der Schieber (410) mittels wenigstens eines weiteren Betätigungszylinders (470) mittels der am Führungselement (440) geführten Führungsnut (430) vertikal verfahrbar ist.

6. Formwerkzeug nach einem der vorhergehenden Ansprüche, **dadurch gekennzeichnet, dass** der Schieber(410) an seiner der ersten Kavität (240) zugewandten Vorderkante (414) eine an die Kontur der Umschäumung (120) angepasste Kontur (412) aufweist.

7. Formwerkzeug nach einem der vorhergehenden Ansprüche, **dadurch gekennzeichnet, dass** der Schieber (410) mit wenigstens einer zumindest teilweise den Angusskanal (210) und die weitere Kavität (220) mit Abstand umgebenden Dichtung (416) versehen ist.

8. Formwerkzeug nach einem der Ansprüche 2 bis 7, **dadurch gekennzeichnet, dass** in der Hauptleitung (370) des Reinigungszylinder (355) nach dem Abzweig der Zweigleitung (460) ein zusätzliches Ventil oder ein hydraulisches Verzögerungsorgan (380) vorgesehen ist, das einen Zeitversatz zwischen der hydraulischen Beaufschlagung des Betätigungszylinders (450) und der hydraulischen Beaufschlagung des Reinigungszylinders (355) bewirkt.

9. Formwerkzeug nach einem der vorhergehenden Ansprüche, **dadurch gekennzeichnet, dass** der Angussabschneider (400) um eine Schwenkachse (480) schwenkbar am Formwerkzeug (200) gelagert ist.

10. Formwerkzeug nach Anspruch 9, **dadurch gekennzeichnet, dass** die Schwenkung des Angussabschneiders (400) um die Schwenkachse (480) erst nach der Bewegung des Schiebers (410) in seine Endposition zum Abschluss der ersten Kavität (240) gegenüber dem Angusskanal (210) und/oder gegenüber der weiteren Kavität (220) erfolgt.

## Claims

1. A mold (200) for producing a foam cladding (120) made of plastic on a planar component (100) or for producing a foamed plastic part (120), comprising a mixing head (300) for producing liquid plastic from at least two components, at least one first cavity (240) for receiving the plastic in order to form the foam cladding (120) or to produce the foamed plastic part (120), a sprue channel (210) for connecting the mixing head (300) to the at least one first cavity (240), and a further cavity (220), which is formed at the transition of the sprue channel (210) to the first cavity (240) and widens the sprue channel (210), wherein a sprue cutter (400) having at least one slide (410) is movably mounted on the mold (200), which slide (410) can be moved by means of at least one actuating cylinder (450) in the direction of the sprue channel (210) toward the first cavity (240) and, in an end position of the movement of the slide (410), closes off the first cavity (240) from the sprue channel (210) and/or from the further cavity (220) by means of at least one edge (414) and/or contour (412), wherein when the slide (410) is in its end position, a gap (230) for receiving superfluous plastic material is unblocked between the slide (41) and the mixing head (300) in the vicinity of the sprue channel (210).

2. The mold according to claim 1, **characterized in that** the actuating cylinder (450) is hydraulically connected by means of a branch line (460) to a main line (370) of a cleaning cylinder (355), which is used to actuate a cleaning piston (365) in order to clean the mixing head (300).

3. The mold according to claim 2, **characterized in that** the actuating cylinder (450) and the cleaning piston (365) can only be actuated when the first cavity (240) is completely filled.

4. The mold according to any of claims 1 to 3, **characterized in that** the slide (410) is connected to the actuating cylinder (450) by means of a guide element (440) that is displaceably mounted in a vertical guide groove (430).

5. The mold according to claim 4, **characterized in that** the slide (410) can be moved vertically by means of at least one further actuating cylinder (470) by means of the guide groove (430) that is arranged on the guide element (440).

6. The mold according to any one of the preceding claims, **characterized in that** the slide (410) has, on its front edge (414) facing toward the first cavity (240), a contour (412) that is adapted to the contour of the foam cladding (120).

7. The mold according to any one of the preceding claims, **characterized in that** the slide (410) comprises at least one seal (416) at least partially surrounding the sprue channel (210) and the further cavity (220) with clearance.

8. The mold according to any one of claims 2 to 7, **characterized in that** an additional valve or a hydraulic delay element (380) is provided in the main line (370) of the cleaning cylinder (355) after the branch line (460), which valve or hydraulic delay element (380) causes a time delay between the hydraulic impingement of the actuating cylinder (450) and the hydraulic impingement of the cleaning cylinder (355).

9. The mold according to any one of the preceding claims, **characterized in that** the sprue cutter (400) is mounted on the mold (200) so as to be swivelable about a pivot axis (480).

10. The mold according to claim 9, **characterized in that** the swiveling of the sprue cutter (400) about the pivot axis (480) occurs only after the slide (410) has moved into its end position in order to close off the first cavity (240) from the sprue channel (210) and/or from the further cavity (220).

## Revendications

1. Outil de moulage (200) pour la fabrication d'un enrobage de mousse (120) en matière plastique sur un élément en forme de plaque (100) ou pour la fabrication d'une pièce en matière plastique moussée (120), avec une tête de mélange (300) pour produire une matière plastique liquide à partir d'au moins deux composants, avec au moins une première cavité (240) destinée à recevoir la matière plastique pour former l'enrobage de mousse (120) ou la pièce en matière plastique moussée (120), avec un canal de carotte (210) pour relier la tête de mélange (300) à la au moins une première cavité (240) et avec une autre cavité (220) formée à la jonction du canal de carotte (210) et de la première cavité (240) et élargissant le canal de carotte (210), un coupe-carotte (400) avec au moins un coulisseau (410) étant monté mobile sur l'outil de moulage (200), lequel peut être déplacé au moyen d'au moins un cylindre d'actionnement (450) en direction du canal de carotte (210) vers la première cavité (240) et, dans une position finale de son mouvement, ferme la première cavité (240) avec au moins une arête (414) et/ou un contour (412) par rapport au canal de carotte (210) et/ou par rapport à l'autre cavité (220), où, dans la position finale du coulisseau (410), une fente (230) est libérée entre le coulisseau (410) et la tête de mélange (300) dans la zone du canal de carotte (210) pour recevoir la matière plastique superflue.

2. Outil de moulage, selon la revendication 1, **caractérisé en ce que** le cylindre d'actionnement (450) est relié hydrauliquement, au moyen d'une conduite de dérivation (460), à une conduite principale (370) d'un cylindre de nettoyage (355) qui sert à actionner un piston de nettoyage (365) pour nettoyer la tête de mélange (300).

3. Outil de moulage selon la revendication 2, **caractérisé en ce que** le cylindre d'actionnement (450) et le piston de nettoyage (365) ne peuvent être actionnés que lorsque la première cavité (240) est entièrement remplie.

4. Outil de moulage selon l'une des revendications 1 à 3, **caractérisé en ce que** le coulisseau (410) est relié au cylindre d'actionnement (450) par un élément de guidage (440) monté coulissant dans une rainure de guidage verticale (430).

5. Outil de moulage selon la revendication 4, **caractérisé en ce que** le coulisseau (410) est configuré pour pouvoir être déplacé verticalement au moyen d'au moins un autre cylindre d'actionnement (470) au moyen de la rainure de guidage (430) guidée sur l'élément de guidage (440).

6. Outil de moulage selon l'une des revendications précédentes, **caractérisé en ce que** le coulisseau (410) présente, sur son bord avant (414) tourné vers la première cavité (240), un contour (412) adapté au contour de l'enrobage de mousse (120).

7. Outil de moulage selon l'une des revendications précédentes, **caractérisé en ce que** le coulisseau (410) est pourvu d'au moins un joint d'étanchéité (416) entourant au moins partiellement le canal de carotte (210) et l'autre cavité (220) à distance.

8. Outil de moulage selon l'une quelconque des revendications 2 à 7, **caractérisé en ce qu'**il est prévu dans la conduite principale (370) du cylindre de nettoyage (355), en aval de la dérivation de la conduite de dérivation (460), une vanne supplémentaire ou un organe hydraulique de temporisation (380) qui provoque un décalage temporel entre l'alimentation hydraulique du cylindre d'actionnement (450) et l'alimentation hydraulique du cylindre de nettoyage (355).

9. Outil de moulage selon l'une des revendications précédentes, **caractérisé en ce que** la coupe-carotte (400) est montée sur l'outil de moulage (200) de manière à pouvoir pivoter autour d'un axe de pivotement (480).

10. Outil de moulage selon la revendication 9, **caractérisé en ce que** le pivotement de la coupe-carotte (400) autour de l'axe de pivotement (480) n'a lieu qu'après le déplacement du coulisseau (410) dans sa position finale pour fermer la première cavité (240) par rapport au canal de carotte (210) et/ou par rapport à l'autre cavité (220).
